Europäisches Patentamt

European Patent Office

Office européen des brevets

(19)

(11)     EP 0 992 539 B1

(12)     **EUROPEAN PATENT SPECIFICATION**

(45) Date of publication and mention
of the grant of the patent:
**16.03.2005   Bulletin 2005/11**

(21) Application number: **98928624.0**

(22) Date of filing: **23.06.1998**

(51) Int Cl.[7]: **C08F 10/02**, B32B 27/32

(86) International application number:
**PCT/JP1998/002784**

(87) International publication number:
**WO 1998/058999 (30.12.1998 Gazette 1998/52)**

(54) **ETHYLENE (CO)POLYMERS, AND LAMINATE AND HOLLOW MOLDING MADE BY USING THE SAME**

ETHYLENCOPOLYMERE UND DARAUS HERGESTELLTE VERBUNDFOLIE UND HOHLKÖRPER

COPOLYMERES D'ETHYLENE, STRATIFIE ET MOULAGE CREUX PRODUITS AU MOYEN DE CES COPOLYMERES

(84) Designated Contracting States:
**BE DE ES FR GB IT**

(30) Priority:  **24.06.1997  JP 16693697**
          **24.06.1997  JP 16693797**

(43) Date of publication of application:
**12.04.2000   Bulletin 2000/15**

(73) Proprietor: **Japan Polyolefins Co., Ltd.**
**Tokyo, 105-0001 (JP)**

(72) Inventors:
 • **OGAWA, Koichi, Japan Polyolefins Co., Ltd.**
**Kawas.-ku, Kawas.-shi, Kanagawa 210-0863 (JP)**
 • **KONDOU, Haruhiko, Japan Polyolefins Co., Ltd.**
**Ohita-shi, Ohita 870-0111 (JP)**
 • **TAKAHASHI, Kei, Japan Polyolefins Co., Ltd.**
**Ohita-shi, Ohita 870-0111 (JP)**
 • **TABUCHI, Daizo, Japan Polyolefins Co., Ltd.**
**Kawas.-ku, Kawas.-shi, Kanagawa 210-0863 (JP)**
 • **KANAZAWA, Satoshi,**
**Japan Polyolefins Co., Ltd.**
**Kawas.-ku, Kawas.-shi, Kanagawa 210-0863 (JP)**

(74) Representative: **Kirkham, Nicholas Andrew et al**
**Graham Watt & Co LLP**
**St Botolph's House**
**7-9 St Botolph's Road**
**Sevenoaks Kent TN13 3AJ (GB)**

(56) References cited:
**JP-A- 6 248 124          JP-A- 9 169 087**
**JP-A- 59 196 346         US-A- 4 454 751**

**Description**

TECHNICAL FIELD

This invention relates to a novel ethylene (co)polymer, and laminate and hollow molding or blow molded products made by using the same. More particularly, this invention relates to an ethylene (co)polymer which is excellent in mechanical strengths such as impact resistance, moldability, etc. and applicable to extrusion molding, injection molding, blow molding, etc., which is excellent for use in large blow molded products required of drawdown resistance, puncture resistance, parison thickness controllability (parison control response), pinch-off properties, durability, etc., in particular excellent in fire resistance required for fuel tanks, to hollow moldings, laminates and hollow multilayer moldings made by using the same.

BACKGROUND ART

Generally, detergent bottles, food containers such as beverage bottles and vegetable oil bottles, large vessels such as drum cans and industrial cans, fuel containers such as kerosene cans and gasoline tanks, spoilers, bumpers and the like are produced by a blow molding process. The blow molding process is to pinch with a mold a cylindrically extruded parison composed of a melted resin, blowing air into the parison to blow up and change the shape of it so as to conform to the shape of the cavity of the mold, and then cooling it.

The blow molding process is widely utilized since it is applicable widely to large fuel tanks having complicated shapes, drums, and further panel-like moldings as well as hollow moldings such as bottles and since molding is simple and molding costs covering molds are inexpensive.

Recently, in the field of large vessels such as drum cans and large containers, substitution by plastics is being carried forward positively taking into consideration freedom in shape, economy, safety, and adaptability to environmental problems.

It is also the case in the field of automobile industry such as fuel tanks, bumpers and spoilers. Particularly in the field of fuel tanks, substitution by plastics proceeds remarkably along with the development of fuel permeation preventing technology by a co-extrusion technology, a sealer technology, a continuous multi-ply technology, etc.

When large products are blow molded, a phenomenon that a parison droops down due to its own weight (drawdown) tends to occur. To make the drawdown small, it has been known to use a resin having sufficiently high viscosity and melt tension.

In molding hollow moldings having a complicated shape, there tends to occur a local increase in blow ratio to cause puncture or local thinning of a parison. To prevent the puncture or local thinning of a parison, it has been known to control the thickness of the parison (parison control) to make a desired portion thick or make alterations in the appliance such as alteration of the shape of a mold.

Conventionally, there has been a problem that an increase in molecular weight and an increase in viscosity in order to improve the drawdown resistance of polyethylene results in aggravation of extrusion properties (extrusion rate, parison surface conditions) and welded strength of a parison becomes worse so that the pinch-off shape is worsened. As a method for solving the problem have been known, for example, the method in which a multi-step polymerization method using a Ziegler-type catalyst (Japanese Patent Application Laid-open No. Sho 55-152735), the method in which a small amount of radical generator and crosslinking auxiliary are added to polyethylene resin (Japanese Patent Publication Hei 2-52654), the method in which two polyethylene components are blended in a certain proportion (Japanese Patent Application Laid-open No. Hei 6-299009), etc.

However, recently larger and more complicated blow moldings are being produced so that further improvement of drawdown resistance of a resin is becoming necessary in order to extrude a heavy parison to a larger length in a stable manner. Also, in order to improve the fuel permeation of a fuel tank, 5 there is a demand for a multilayer fuel tank provided with an ethylene/vinyl acetate copolymer saponification product (hereafter, called EVOH), which has poor heat resistance, as a barrier material. In molding them, a blow molding machine of a continuous extrusion type having a smaller retention portion and suffering less thermal decomposition of EVOH is becoming to be put in use for blow molding larger fuel tanks in place of a blow molding machine of an accumulator type which has heretofore been used for larger size molding. As compared with the accumulator type, the continuous extrusion type molding machine takes a long time for extruding a parison so that drawdown of a parison tends to occur more frequently. Therefore, there is a demand for a resin having an increased drawdown resistance.

For this purpose, the improved polyethylenes obtained, for example, by the above-mentioned processes are insufficient in drawdown resistance for obtaining large hollow moldings.

Also, according as the shape of hollow moldings becomes more complicated, there come into question phenomena that parisons will puncture when they are being formed by blowing and that local thinning of a product will occur at its corner portions, etc.

To prevent these problems, a method has generally been used in which a parison controller is used in order to control the thickness of a parison. However, conventional polyethylene and resin compositions thereof grow to have insufficient parison thickness controllability (parison control response) so that improvement of parison control response is desired. Also, as the method for enabling molding of deep drawn articles having complicated shapes, there have been known, for example, the method in which a split mold is used (Plastics, Vol. 42, No. 5, p.64-71) and the method in which a blow molding machine with a mold slanting mechanism is used (Plastics, Vol. 41, No. 10, p.59-69). However, the above-mentioned methods have a problem that costs for the apparatus and mold are high.

Furthermore, in the field of fuel tanks, which require fire resistance as one of the requisite properties, there have been proposed ethylene copolymers having an α-olefin content within a specified range and inherent viscosity, zero shear viscosity and time for melt stretching breakage being prescribed to be within respective specified ranges as a preferred material (Japanese Patent Application Laid-open No. Hei 7-101433). However, they are in an insufficient state in molding processability and fire resistance to cope with weight reduction and thickness reduction.

DISCLOSURE OF THE INVENTION

An object of the present invention is to overcome the defects of conventional polyethylenes and provide an ethylene (co)polymer having excellent drawdown resistance, puncture resistance, parison control response, and pinch-off properties.

Another object of the present invention is to provide blow molded products which are improved against the phenomena that the parison of blow molding having a complicated shape will puncture when expansion shaped and that there will occur local thinning of corner portions of products, by use of the above-mentioned ethylene (co)polymer or its composition.

Still another object of the present invention is to provide blow molded multilayer containers having a capability of preventing permeation of various fuels and causing no local thinning.

In a first aspect, the present invention relates to an ethylene (co)polymer which satisfies the following requirements (a) to (d):

(a) a density of 0.93 to 0.98 g/cm$^3$,
(b) a molecular weight distribution (Mw/Mn) of 25 to 50,
(c) that values of slope a and of intercept b obtained from a die swell (DS) and a shear rate (γ) measured in a region of shear rate (γ) (6.08 to 24.8 sec$^{-1}$) at 230 °C, in accordance with the equation (1) below

$$DS = a \times Ln(\gamma) + b \tag{1}$$

are such that $a \leqq 0.05$ and $b \leqq 1.45$,
(d) that the stress ratio of a stress (σ) at a strain of 1.0 to a maximum stress (σmax) in a stress-strain curve for uniaxial stretching at 0.1 sec$^{-1}$ measured at 170 °C is such that $\sigma max/\sigma \geqq 2.1$.

Preferably, the present invention relates to an ethylene (co)polymer which further satisfies the requirement (e) that a value of (a) as defined by the equation (2) below

$$a = \varepsilon/t \tag{2}$$

(wherein α is ε/t when ε defined by $\varepsilon = -Ln$(sample diameter after t seconds $I_t$/initial sample diameter $I_0$) is 0.6) when uniaxially stretched under a constant tension such that initial stress (= tension/initial cross section of sample) measured at 170 °C is $3.0 \times 10^4$ Pa is not greater than 0.03 and time for sample breakage is not shorter than 25 seconds.

More preferably, the present invention relates to an ethylene (co)polymer which further satisfies the requirement (f) HLMFR $\leqq$ 10g/10min and which has a C$_{3-20}$ α-olefin content of 10 mol% or less.

In a second aspect, the present invention relates to blow molded products comprising the above-mentioned ethylene (co)polymer or composition thereof, preferably a fuel tank which exhibits superiority of the above-mentioned ethylene (co)polymer or composition thereof.

In a third aspect, the present invention relates to a laminate comprising a layer comprising the above-mentioned ethylene (co)polymer or composition thereof, a barrier layer, and optionally an adhesive layer and preferably to a laminate in which the barrier layer comprises at least one member selected from polyamide resins, ethylene/vinyl acetate copolymer saponification products, polyester resins, polyvinylidene chloride resins and compositions thereof. It is desirable that for the adhesive layer, adhesive resins which comprise copolymers of unsaturated carboxylic acids or derivatives thereof with olefins or polyolefin resins modified with unsaturated carboxylic acids or derivatives thereof be used.

In a fourth aspect, the present invention relates to a blow molded multilayer container comprising a laminate which comprises a layer comprising the above-mentioned ethylene (co)polymer or compositions thereof, an adhesive layer and a barrier layer, and preferably such exhibits superiority in multilayer blow molded fuel tanks.

In a fifth aspect, the present invention relates to a blow molded multilayer container comprising a laminate which comprises at least one resin layer selected from the recycled resin composed of the above-mentioned laminate, or compositions of the ethylene (co)polymer according to the first aspect containing the recycled resin, or compositions of these with polyolefin resin, a barrier layer, and optionally an adhesive layer, and preferably such exhibits superiority in physical properties and economy in blow molded multilayer fuel tanks.

BRIEF DESCRIPTION OF THE DRAWINGS

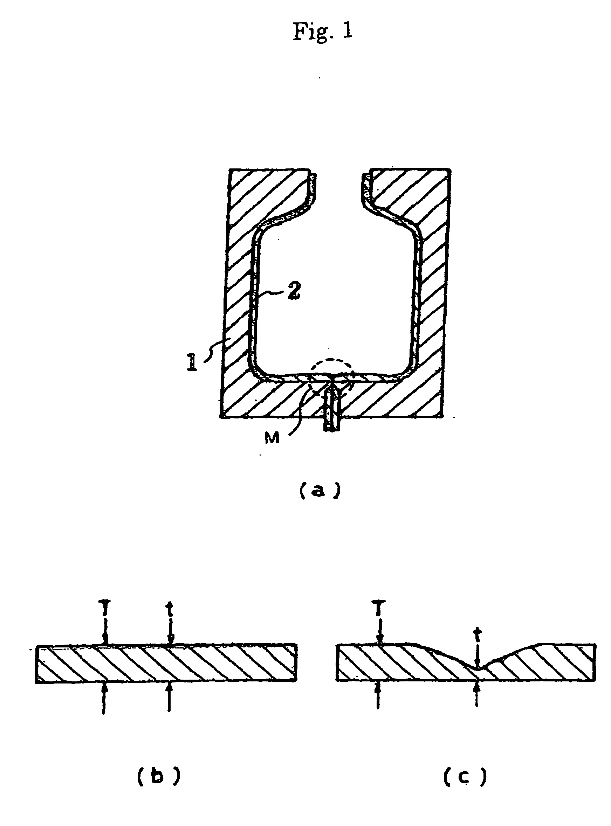

Fig. 1 is diagrams illustrating pinch-off properties when blow molding ethylene (co)polymers (2) of example and comparative example using a mold (1), with (a) being a vertically cut cross sectional view with respect to the pinch-off line of blow molding, (b) and (c) being partial enlarged views of (a) at a pinch-off middle portion (M), with (b) showing that the pinch-off shape is in a good state and (c) showing that the pinch-off shape is in a bad state.

DETAILED DESCRIPTION OF THE INVENTION

Hereafter, the present invention will be described in more detail.

The present invention has been achieved based on the finding that ethylene (co)polymer comprising an ethylene homopolymer or a copolymer of ethylene and $\alpha$-olefin having 3 or more carbon atoms and having a density, a molecular weight distribution, a relationship between a die swell (DS) and a shear rate ($\gamma$), a stress ratio, a time for melt breakage of resin which are adjusted to specified ranges is excellent in drawdown resistance, puncture resistance, parison control response, pinch-off shape properties, fire resistance, etc.

The ethylene (co)polymer of the present invention is an ethylene homopolymer or a copolymer of ethylene with an $\alpha$-olefin having 3 to 20 carbon atoms. The $\alpha$-olefin include, for example, propylene, 1-butene, 1-pentene, 1-hexene, 4-methylpentene-1, 1-octene, 1-decene, etc. The content of $\alpha$-olefin is 10 mol% or less. If the content of $\alpha$-olefin exceeds 10 mol%, there is the fear that the rigidity of (co)polymer decreases.

The ethylene (co)polymer of the present invention has a density of 0.93 to 0.98 g/cm$^3$, and preferably 0.944 to 0.97 g/cm$^3$. If the density is below 0.93 g/cm$^3$, the rigidity and fire resistance decrease. On the other hand, if the density exceeds 0.98 g/cm$^3$, the impact strength decreases.

The ethylene (co)polymer of the present invention has a molecular weight distribution (Mw/Mn) which must be in the range of 25 to 50, preferably 27 to 50, and more preferably 30 to 50.

If the molecular weight distribution is below 25, drawdown resistance and extrusion properties are poor while a molecular weight distribution exceeding 50 results in an increased die swell (DS) and an increased slope (a) of the equation (1) described below, a decreased parison control response, and an increased smoke when extruding parisons.

The ethylene (co)polymer of the present invention requires that values of slope a and of intercept b obtained from a die swell (DS) and a shear rate ($\gamma$) measured in a region of shear rate ($\gamma$) (6.08 to 24.8 sec$^{-1}$) at 230 °C, in accordance with the equation (1) below

$$DS = a \times Ln(\gamma) + b \qquad\qquad (1)$$

(wherein Ln ($\gamma$) is a natural logarithmic value of shear rate ($\gamma$)) are such that $a \leqq 0.05$ and $b \leqq 1.45$. The value of slope a is preferably in the range of $a \leqq 0.03$, and the value of intercept b is preferably in the range of $b \leqq 1.35$.

Where the value of slope a is $a \leqq 0.05$ and the value of intercept b is $b > 1.45$, or the value of slope a is $a > 0.05$, control of the thickness of a parison (parison control response) becomes difficult.

The ethylene (co)polymer of the present invention requires that the stress ratio of a stress ($\sigma$) at a strain of 1.0 to a maximum stress ($\sigma$max) in a stress-strain curve in uniaxial stretching at 0.1 sec$^{-1}$ measured at 170 °C is in the range of $\sigma$max/$\sigma \geqq 2.1$, and preferably 2.5 or more. Where the stress ratio ($\sigma$max/$\sigma$) is less than 2.1, the puncture resistance decreases.

More preferably, the ethylene (co)polymer of the present invention requires that a value of ($\alpha$) as defined by

the equation (2) below

$$\alpha = \varepsilon/t \qquad (2)$$

(wherein $\alpha$ is $\varepsilon/t$ when $\varepsilon$ defined by $\varepsilon = -Ln$(sample diameter after t seconds $I_t$ /initial sample diameter $I_0$) is 0.6) when uniaxially stretched under a constant tension such that initial stress (= tension/initial cross section of sample) measured at 170 °C is $3.0 \times 10^4$ Pa is not greater than 0.03 and time for sample breakage is not shorter than 25 seconds. If $\alpha$ exceeds 0.03, the deformation speed is higher whereas time for breakage less than 25 seconds results in a shortened hole opening time, so that there is the fear that fire resistance will be poor.

The ethylene (co)polymer of the present invention desirably has (f) HLMFR (High Load Melt Flow Rate) of 10.0 g/10 min or less. In particular, HLMFR for large blow molded products such as fuel tanks is preferably 5.0 (g/10 min) or less, and more preferably 4.0 (g/10 min) or less. Where HLMFR is above 10.0 (g/10 min), there is the fear that the drawdown resistance will remain unimproved.

The ethylene (co)polymer of the present invention is excellent in molding processability, rigidity and mechanical properties and is applied to extrusion molding, injection molding, blow molding, etc. Satisfaction of the above-mentioned requirements (a) to (e), and further the requirement (f) in the case of large or complicated-configured moldings such as tanks, overcomes the defects that the conventional polyethylene for blow molding has and provides the moldings with superiority in drawdown resistance, puncture resistance, parison control response, pinch-off properties or fire resistance.

The method for producing the ethylene (co)polymer of the present invention is not limited particularly so long as the requirements (a) to (d) above, desirably further the requirement (e), and more desirably further the requirement (f), are satisfied and it can be produced by a gas phase polymerization method, a slurry polymerization method, a solution polymerization method, etc., in the presence of a catalyst such as a Ziegler type catalyst, a Phillips type catalyst, a metallocene type catalyst or the like. Polymerization conditions are not limited particularly, but the polymerization temperature is usually 15 to 350 °C, preferably 20 to 200 °C, and more preferably 50 to 120 °C. The polymerization pressure is usually from atmospheric to 70 KgG/cm$^2$, preferably atmospheric to 50 KgG/cm$^2$ in the case of low/medium pressure methods, whereas in the case of high pressure methods, it is desirable that the polymerization pressure is usually not higher than 1,500 KgG/cm$^2$. The polymerization method may be one step polymerization or multi-step polymerization having two-steps or more in which different polymerization conditions such as hydrogen concentration, monomer concentration, polymerization pressure, polymerization temperature, catalyst, etc. are used and is not limited particularly. It is also possible to blend a plurality of components having different properties to prepare the ethylene (co)polymer of the present invention.

In the present invention, known additives such as antistatic agents, antioxidants, lubricants, anti-blocking agents, anti-fogging agents, organic or inorganic pigments, fillers, ultraviolet absorbents, dispersants, weathering agents, crosslinking agents, foaming agents, flame retardants, etc. can if desired be added in such amounts that the object is not obstructed.

The hollow moldings of the present invention are hollow molding made of the above-mentioned ethylene (co) polymer or composition thereof and include detergent bottles, food containers such as beverage bottles and vegetable oil bottles, vessels such as kerosene cans, drums and medicine bottles, various fuel containers, various components such as spoilers, bumpers, etc., housings of home electric products, OA apparatus, etc., panel-like construction components for constituting simple toilets, pallets and the like.

The above-mentioned ethylene (co)polymer or composition thereof may be blended with in addition to the ethylene (co)polymer of the present invention other polyolefin resin in amounts of 1 to 70% by weight. The method of producing hollow moldings of the present invention includes an extrusion blow molding method, an injection blow molding method, an extrusion stretching blow molding method, an injection stretching blow molding method, etc., but not limited particularly to a cold parison method, a hot parison method, etc.

In another aspect, the present invention relates to a laminate, comprising at least a layer comprising the above-mentioned ethylene (co)polymer or composition thereof (hereafter, referred to as the present resin layer), and a barrier layer. The above-mentioned laminate is not limited particularly so long as there is a structure of the above-mentioned two types of layers and the order of their lamination is not limited particularly. Generally, it is preferred that the barrier layer is an intermediate layer and along with (an) adhesive layer(s) an inner layer and/or outer layer is constituted by the present resin layer, and the outer or inner layer is an other polyolefin layer.

The barrier layer used in the present invention is constituted by at least one resin selected from polyamide resins, ethylene/vinyl acetate copolymer saponification products, polyacrylonitrile resins, polymethacrylonitrile resins, polyacetal resins, polyester resins, polyvinylidene chloride resins, polycarbonate resins, or compositions thereof. From the viewpoint of performance and physical properties, polyamide resins, ethylene/vinyl acetate copolymer saponification products, poly(meth)acrylonitrile resins, polyester resins and polyvinylidene chloride resins are desirable.

The polyamide resins include polyamides obtained by polycondensation of a diamine with a dicarboxylic acid, polyamides obtained by condensation with an aminocarboxylic acid, polyamides obtained from a lactam, or copolymerized polyamides therefrom and those having a relative viscosity in the range of 1 to 6, a melting point of 170 to 280 °C, preferably 200 to 240 °C are used. More specifically, there can be cited nylon-6, nylon-66, nylon-610, nylon-9, nylon-11, nylon-12, nylon-6/66, nylon-66/610, nylon-6/11 and mixtures or polymer alloys of these polyamide resins with polyolefin resins and the like. Of these, nylon-6 is preferred.

The above-mentioned ethylene/vinyl acetate copolymer saponification products include, for example, ethylene/vinyl acetate saponification products such as an ethylene/vinyl acetate copolymer having a degree of saponification of 90% or more, preferably 95% or more and an ethylene content of 15 to 50 mol%.

The poly(meth)acrylonitrile resins are (co)polymers which are polymers composed of a methacrylonitrile unit and/or acrylonitrile unit or copolymers composed of these units and an alkyl (meth)acrylate unit, with the ratio by weight being in the range of 95:5 to 70:30, and which have a weight average molecular weight measured by a GPC method in the range of 60,000 to 200,000.

The above-mentioned polyester resins include thermoplastic polyesters such as polyethylene terephthalate, polybutylene terephthalate, polyethylene terephthalate/isophthalate, polyethylene naphthalate, and benzoic acid polyester and mixtures or polymer alloys of these with polyolefins.

The above-mentioned polyvinylidene chloride resins are polymers having a vinylidene chloride unit content of, for example, 70 to 99 mol%, and preferably 80 to 98 mol% and examples of comonomer of the polyvinylidene chloride resin include acrylic monomers such as acrylonitrile, methacrylonitrile, methyl methacrylate, ethyl methacrylate, propyl methacrylate, glycidyl methacrylate, glycidyl acrylate, hydroxyethyl acrylate, and hydroxypropyl acrylate, and vinyl monomers such as vinyl chloride.

The adhesive layer used in the present invention is constituted by a resin which is at least one adhesive resin selected from copolymers of an unsaturated carboxylic acid or derivatives thereof and an olefin, modified polyolefins having an unsaturated carboxylic acid or derivatives thereof grafted thereto or resin composition which is a mixtures of that adhesive resin with unmodified polyolefin or the like.

Specific examples of the above-mentioned copolymers of unsaturated carboxylic acid or derivative thereof and an olefin include binary or more copolymers such as ethylene/(meth)acrylic acid copolymers, ethylene/glycidyl (meth)acrylate copolymers, ethylene/glycidyl (meth)acrylate/vinyl acetate terpolymers, ethylene/maleic anhydride copolymers, ethylene/(meth)acrylic acid/maleic anhydride terpolymers, styrene/maleic anhydride copolymers, and ethylene/styrene/maleic anhydride terpolymers.

The polyolefin modified with an unsaturated carboxylic acid or derivatives thereof of the present invention are polymers obtained by graft modifying polyolefin with an unsaturated carboxylic acid or derivatives thereof in the presence of a free radical generator such as an organic peroxide in an extruder or a kneader such as a Henschel mixer, or in a solvent such as a hydrocarbon.

Specific examples of the modified polyolefin include maleic anhydride-modified high density polyethylene, maleic anhydride-modified linear low density polyethylene, maleic anhydride-modified very-low density polyethylene, maleic anhydride-modified polypropylene and the like.

These are used singly or as modified polyolefin compositions by blending them with the above-mentioned unmodified polyolefin and optionally rubbers, etc., if desired.

The blending proportion of the adhesive resin and unmodified polyolefin is not limited particularly but generally the unmodified polyolefin may be blended in a blending proportion of 1 to 99% by weight. Further, it is desirable that the content of unsaturated carboxylic acid or derivatives thereof in the adhesive resin or composition thereof be selected in the range of $10^{-8}$ to $10^{-3}$ mole, and preferably $10^{-7}$ to $10^{-4}$ mole, per g of the resin component. With a content of below $10^{-8}$ mole, the adhesive strength is insufficient but a content exceeding $10^{-3}$ mole would cause "burn marks" or "gel" and be uneconomical.

The above-mentioned polyolefin resins include high/medium density polyethylenes, linear low density polyethylene, very-low density polyethylene, low density polyethylene by high pressure radical polymerization, ethylene/vinyl ester copolymers such as ethylene/vinyl acetate copolymers, polyethylene resins such as ethylene/unsaturated carboxylic acid alkyl ester copolymers such as ethylene/ethyl (meth)acrylate copolymers, propylene homopolymers, propylene/$\alpha$-olefin random or block copolymers, $\alpha$-olefin homopolymers such as 1-butene polymers, etc., mutual copolymers of these or the like. Of these, high/medium density polyethylenes, linear low density polyethylene, very-low density polyethylene, etc. are preferred.

The unsaturated carboxylic acid or derivatives thereof used in the present invention include acrylic acid, methacrylic acid, maleic acid, fumaric acid, itaconic acid, citraconic acid or their anhydrides, metal salts and the like. Of these, maleic anhydride is preferred.

The free radical generator used for graft modification includes organic peroxides, dicumyl compounds, etc. Because of reactivity and ease of handling, organic peroxide-base compounds are preferred. Specific examples thereof include dicumyl peroxide, 2,5-dimethyl-2,5-bis(t-butylperoxy)hexane, 2,5-dimethyl-2,5-bis(t-butylperoxy)hexyne-3, 1,3-bis(2-t-butylperoxyisopropyl)benzene, benzoyl peroxide, etc. Examples of the dicumyl compounds include 2,3-dimethyl-2,3-diphenylbutane, 2,3-diethyl-2,3-diphenylbutane, 2,3-diethyl-2,3-di(p-methylphenyl)butane, 2,3-diethyl-2,3-di(p-bromophenyl)butane, etc. In particular, 2,3-diethyl-2,3-diphenylbutane is used preferably.

The hollow multilayer moldings of the present invention are obtained by extruding the respective resin layers described above through a multilayer die using a plurality of extruders and combine the layers before blow molding can be performed. For large vessels such as fuel tanks, drum cans and the like, drawdown resistance is more strictly required and fuel tanks are of complicated configuration since baffles are arranged therein so that local thinning tends to occur and hence puncture resistance, parison thickness controllability (parison control response), pinch-off shape properties, fire resistance and the like are required. In the present invention, use of the above-mentioned polymer or composition thereof of the present invention allows these requirements to be satisfied.

Further, in the present invention, it is desirable in view of economy to use, as an exterior layer of the hollow multilayer vessels, defective moldings of a laminate containing a layer of the above-mentioned (co)polymer of the present invention or composition thereof, an adhesive layer and a barrier layer, a recycled material such as burr, or a mixture of the recycled material, the (co)polymer of the present invention and general polyolefin resin. The blending amounts of the recycled material and polyolefin are not limited particularly.

The layer structure of the hollow multilayer vessels includes high density polyethylene (HDPE) layer of the invention/adhesive layer/polyamide resin (PA), HDPE layer of the invention/adhesive layer/EVOH, HDPE layer of the invention/adhesive layer/polyester resin (PET), HDPE layer of the invention/adhesive layer/PA/adhesive layer/HDPE layer of the invention, HDPE layer of the invention/adhesive layer/ethylene-vinyl acetate copolymer saponification product (EVOH)/adhesive layer/HDPE layer of the invention, HDPE layer of the invention/adhesive layer/PET/adhesive layer/HDPE layer of the invention, HDPE layer of the invention + HDPE/adhesive layer/PA/adhesive layer/HDPE layer of the invention, recycled layer/adhesive layer/PA/adhesive layer/recycled layer, recycled layer/adhesive layer/PA/adhesive layer/HDPE of the invention, recycled layer/adhesive layer/PA/adhesive layer/HDPE layer, recycled layer + HDPE/adhesive layer/PA/adhesive layer/HDPE layer, HDPE layer/adhesive layer/EVOH layer/adhesive layer/recycled layer/HDPE + carbon black layer, etc.

The thickness of respective layers of the hollow moldings is not limited particularly. In the case of multilayer moldings, generally the thickness of barrier layer is selected in the range of 0.001 to 1.0 mm, and preferably 0.01 to 0.5 mm, and the thickness of adhesive layer is selected in the range of 0.001 to 1.0 mm, and preferably 0.01 to 0.5 mm. Further, the thickness of the layer of the (co)polymer of the present invention or composition thereof and the thickness of other polyolefin layer are selected in the range of 0.5 to 10 mm, and preferably 1.0 to 7 mm.

BEST MODE FOR CARRYING OUT THE INVENTION

Hereafter, the present invention will be described in more detail by referring to examples and comparative examples. However, the present invention is not be limited to the following examples.

The physical properties of polyethylene and polyethylene resin compositions of Examples 1 to 3 and Comparative Examples 1 to 4, respectively, were measured by the following test method.

[Test Method]

(1) Density: According to JIS K6760.

(2) Flexural modulus: According to ASTM D790.

(3) HLMFR:According to JIS K6760.

(4) Measurement of molecular weight distribution:

Measurement was performed using 150 Type GPC manufactured by Waters and two columns, Shodex HT-806M, and 1,2,4-trichlorobenzene (TBC) containing 0.05% by weight of 2,6-di-t-butyl-4-methylphenol (BHT) as a solvent under the conditions of a sample amount of 0.8 mg/ml, a temperature of 140 $^\circ$C, and a flow rate of 1 ml/min.

(5) Measurement of Die Swell:

"Capillograph 1C" manufactured by Toyo Seiki was used.

A sample molten at 230 $^\circ$C was extruded through an orifice having a diameter of 1 mm, a length of 40 mm and an inlet angle of 90$^\circ$ in a region of shear rate ($\gamma$) of 6.08 to 24.32 sec$^{-1}$ and the diameter of the strand at the time when the length of strand reached 75 mm was measured using a laser diameter measuring apparatus attached (distance between the outlet of capillary and die swell detector: 10 mm). Die swell ratio (DS) was calculated as Ds/Do where Ds is the diameter of a strand and Do is the diameter of an orifice. The slope a and intercept b were obtained by the method of least squares by the equation of relationship between DS and Ln($\gamma$):

$$DS = a \times Ln(\gamma)+b.$$

(6) Measurement of Stress Ratio

Preparation of Sample

"Capillograph 1C" manufactured by Toyo Seiki was used.

A sample molten at 210 °C was extruded through an orifice having a diameter of 3 mm, a length of 15 mm and an inlet angle of 90° at a constant piston speed of 10 mm/min to obtain a sample.

Measurement of Stress Ratio

"Molten Rheometer" manufactured by Toyo Seiki was used. After annealing at 170 °C for 1,000 seconds, a sample was clamped by a clamp and stretch viscosity measurement was practiced at a strain speed of 0.1 sec$^{-1}$. The stress at a strain of 1.0 was defined "$\sigma$1.0" and the maximum stress value generated until the sample was broken was defined "$\sigma$max" and stress ratio "$\sigma$max/$\sigma$1.0" was calculated.

Measurement of $\alpha$ Value and Time for Breakage

A sample obtained in the same manner as in the case of measurement of stress ratio were measured using "Melten Rheometer" manufactured by Toyo Seiki. That is, a sample was molten at 170 °C and then clamped by a clamp and its stretch viscosity was measured under a constant tension such that initial stress (= tension/initial cross section of sample) was 3.0x10$^4$ Pa.

Assuming that when $l_0$ is an initial sample diameter and $l_t$ is a sample diameter after t seconds, then $\varepsilon$ = -Ln $(l_t/l_0)$. The value of $\varepsilon/t$ when $\varepsilon$=0.6 is assumed to be $\alpha$, and the time until a sample was broken was measured as a time for breakage.

7) Extrusion Properties:

Multilayer blow molding machine "NB30" manufactured by Nippon Seikosho (main material extruder: 90 mm) was used and the extruded amount was measured at 60 rpm.

(8) Drawdown Resistance:

Multilayer blow molding machine "NB30" manufactured by Nippon Seikosho was used. A 1,600 cm-long parison weighing 8.5 kg was extruded at a resin temperature of 230 °C and after completion of the extrusion, changes in length of parison with lapse of time were measured. The parison after being shortened due to shrink back was sagging as a result of drawdown by self weight and elongated. The length of parison at the time when it was extruded is defined $L_0$ and the time counted from the that time until the parison once shortened by shrinking took the length of $L_0$ again was defined retention time, Tp, and evaluation of drawdown resistance was performed.

(9) Pinch-off Shape Properties

Using the above-mentioned blow molding machine and mold, 40-liter multilayer tanks (each weighing 6 kg) having a layer construction of resin layer of example or comparative example/adhesive layer (maleic anhydride-modified high density polyethylene)/nylon-6/adhesive layer/resin layer of example or comparative example were molded. The pinch-off portions of the obtained moldings were cut vertically with respect to pinch-off welded line. Pinch-off properties were evaluated from the thickness distribution in the cross sectional plane as shown in Fig. 1(a). The thickness of the welded portion at the pinch-off middle portion was defined "t" and the thickness of thicker portions on the both sides was defined "T", and pinch-off properties were evaluated by a ratio of t to T, t/T, (Fig. 1(b) and (c)).

(10) Puncture Resistance:

Using a multilayer blow molding machine "NB30" manufactured by Nippon Seikosho (screw diameter: 90 mm, die diameter: 120 mm) and molds having the same inlet size of W1=200, W2=300) and different depths D (100, 150, 200, and 250 mm), box-shaped hollow moldings were molded and deep draw ratio (D/W1) at which puncture of parison occurred was evaluated to thereby evaluate molding limit (puncture resistance).

(11) Tank Drop Test:

Using the above-mentioned multilayer tanks, drop tests were practiced. The drop tests were conducted by filling the tank with an aqueous 50% ethylene glycol solution to 70% of total volume and vertical drop tests were carried out at -40 °C at a height of 6 m.

(12) Parison Control Response

Using the above-mentioned blow molding machine and mold, box-shaped hollow moldings were obtained by setting a parison controller such that the thickness of a part of the middle portion of the molding was thickened at the time of molding. The parison controller used was a 25-point setting parison controller manufactured by MOOG, attached to the above-mentioned molding machine. By measuring the thickness distribution of the resultant hollow moldings, the controllability of parison controller for the thickness of a parison was measured. The thickness of the middle portion where the thickness was thickened was defined Tp and the thickness at standard point where no thickening occurred was defined Ts and a ratio Tp/Ts was calculated, which was used as an index of parison control response.

(13) Bottle Fire Resistance Tests:

Using the above-mentioned blow molding machine, 300 ml bottles having a thickness of 2 mm or 3 mm were molded. Water was poured into the resultant moldings up to 50% of the inner volume and the moldings were sealed. Then the moldings were burned with propane gas and the time until a hole opened was evaluated as fire resistant time.

(14) Press Plate Melting Test:

Press plates having a thickness of 2 mm or 3 mm were molded. The resultant press plates were burned from one side thereof with a mixed gas of methane and hydrogen and the time until the other side was molten was evaluated as melting time.

Example 1

Component 1 polymerized with a Phillips catalyst and Components 2 and 3 polymerized with $MgCl_2$ carried Ziegler catalyst were blended in a biaxial extruder (KTX-90 manufactured by Kobe Seikosho) to prepare a sample of Example 1. The detailed data and blend ratio for each component are shown in Table 1. The measured properties data are shown in Table 6.

Table 1

| Component | Blending proportion wt% | HL & MFR g/10min | Density g/cm$^3$ |
|---|---|---|---|
| Component 1 | 70 | HL=1.9 | 0.956 |
| Component 2 | 10 | HL=0.30 | 0.942 |
| Component 3 | 20 | MFR=800 | 0.970 |
| Example 1 | - | HL=2.3 | 0.955 |

Example 2

Component 1 polymerized with a Phillips catalyst and Components 2 and 3 polymerized with $MgCl_2$ carried Ziegler catalyst were blended in a biaxial extruder (KTX-90 manufactured by Kobe Seikosho) to prepare a sample of Example 1. The detailed data and blend ratio for each component are shown in Table 2. The measured properties data are shown in Table 6.

Table 2

| Component | Blending proportion wt% | HL & MFR g/10min | Density g/cm$^3$ |
|---|---|---|---|
| Component 1 | 70 | HL=1.9 | 0.956 |
| Component 2 | 10 | HL=0.30 | 0.942 |
| Component 3 | 20 | MFR=800 | 0.970 |
| Example 2 | - | HL=3.1 | 0.957 |

Example 3

Component 1 polymerized with a Phillips catalyst and Components 2 and 3 polymerized with MgCl$_2$ carried Ziegler catalyst were blended in a biaxial extruder (KTX-90 manufactured by Kobe Seikosho) to prepare a sample of Example 3. The detailed data and blend ratio for each component are shown in Table 3. The measured properties data are shown in Table 6.

Table 3

| Component | Blending proportion wt% | HL & MFR g/10min | Density g/cm$^3$ |
|---|---|---|---|
| Component 1 | 65 | HL=1.9 | 0.956 |
| Component 2 | 10 | HL=0.30 | 0.942 |
| Component 3 | 25 | MFR=810 | 0.972 |
| Example 3 | - | HL=4.5 | 0.958 |

Comparative Example 1

Component 1 polymerized with a Phillips catalyst and Components 2 and 3 polymerized with MgCl$_2$ carried Ziegler catalyst were blended in a biaxial extruder (KTX-90 manufactured by Kobe Seikosho) to prepare a sample of Comparative Example 1. The detailed data and blend ratio for each component are shown in Table 4. The measured properties data are shown in Table 6.

Table 4

| Component | Blending proportion wt% | HL & MFR g/10min | Density g/cm$^3$ |
|---|---|---|---|
| Component 1 | 70 | HL=1.8 | 0.953 |
| Component 2 | 10 | HL=0.30 | 0.942 |
| Component 3 | 20 | MFR=790 | 0.968 |
| Comparative Example 1 | - | HL=3.0 | 0.954 |

Comparative Example 2

Component 1 polymerized with a Phillips catalyst and Components 2 polymerized with MgCl$_2$ carried Ziegler catalyst were blended in a biaxial extruder (KTX-90 manufactured by Kobe Seikosho) to prepare a sample of Comparative Example 2. The detailed data and blend ratio for each component are shown in Table 5. The measured properties data are shown in Table 6.

Table 5

| Component | Blending proportion wt% | HL & MFR g/10min | Density g/cm$^3$ |
|---|---|---|---|
| Component 1 | 90 | HL=1.9 | 0.956 |
| Component 2 | 10 | MFR=800 | 0.970 |
| Comparative Example 2 | - | HL=4.2 | 0.957 |

Comparative Example 3

Using a commercially available high density polyethylene for blow molding (density = 0.947g/cm$^3$, HLMFR = 4.6, JLex HD 4551H, manufactured by Japan Polyolefins Co., Ltd.) extrusion properties and the like were evaluated. The results are shown in Table 6.

Comparative Example 4

Using a commercially available high density polyethylene for blow molding (density = 0.951g/cm$^3$, HLMFR = 5.6, Hizex 8200B, manufactured by Mitsui Petrochemical Co., Ltd.) extrusion properties and the like were evaluated. The results are shown in Table 6.

## Table 6

| ITEMS | | Example 1 | Example 2 | Example 3 | Comparative Example 1 | Comparative Example 2 | Comparative Example 3 | Comparative Example 4 |
|---|---|---|---|---|---|---|---|---|
| Density (g/cm$^3$) | | 0.955 | 0.957 | 0.958 | 0.954 | 0.957 | 0.947 | 0.951 |
| Flexural modulus (Kgf/cm$^2$) | | – | 15500 | 16000 | 14000 | 15200 | 11000 | 13000 |
| HLMFR (g/10min) | | 2.3 | 3.1 | 4.5 | 3.0 | 4.2 | 4.6 | 5.6 |
| Molecular weight distribution (Mw/Mn) | | 40 | 31 | 40 | 31 | 29 | 19 | 19 |
| Die swell properties | Slope (a) | 0.029 | 0.030 | 0.033 | 0.032 | 0.094 | 0.036 | 0.029 |
| | Intercept (b) | 1.32 | 1.30 | 1.29 | 1.31 | 1.40 | 1.29 | 1.21 |
| Stress ratio ($\sigma$ max/$\sigma$ 1.0) | | 2.85 | 3.01 | 2.98 | 3.05 | 2.97 | 3.5 | 1.78 |
| $\alpha$ Value | | – | 0.024 | 0.026 | 0.025 | 0.033 | 0.048 | 0.056 |
| Time for breakage (second) | | – | 31.5 | 30.2 | 30.6 | 26 | 16.1 | 12.6 |
| Extrusion properties (kg/hr) | | 101 | 107 | 120 | 109 | 90 | 101 | 96 |
| Drawdown resistance (Tp: second) | | >60 | >60 | 45 | >60 | 35 | 30 | 18 |
| Pinch-off shape properties (t/T) | | 1.0 | 1.0 | 1.0 | 1.0 | 1.0 | 1.0 | 0.67 |
| Puncture resistance (Blow ratio:D/W1) | | >1.25 | >1.25 | >1.25 | >1.25 | >1.25 | >1.25 | 1.0 |
| Tank drop test (-40 °C, 6m) | | O | O | O | O | O | O | Pinch cracks |
| Parison control response (Tp/Ts) | | 1.50 | 1.51 | 1.48 | 1.50 | 1.32 | 1.46 | 1.33 |
| Bottle fire resistance test (hole opening time: second) | 2mm | – | 117 | 118 | 105 | 109 | 96 | 95 |
| | 3mm | – | 204 | 206 | 185 | 190 | 167 | 164 |
| Press plate melting test (melting time: second) | 2mm | – | 32 | 36 | 27 | 31 | 21 | 24 |
| | 3mm | – | 55 | 60 | 48 | 54 | 40 | 44 |

INDUSTRIAL APPLICABILITY

As described above, by use of the (co)polymer of the present invention there can be obtained hollow moldings which are excellent in drawdown resistance, puncture resistance, parison control response, pinch-off shape and fire resistance, causes no local thinning and is excellent in mechanical strength such as impact strength and rigidity. It can be used advantageously as a material for blow molding of large hollow moldings such as fuel tanks and drum cans having complicated shapes such as baffles.

**Claims**

1.  An ethylene (co)polymer which satisfies the following requirements (a) to (d):

    (a) a density of 0.93 to 0.98 g/cm$^3$.
    (b) a molecular weight distribution (Mw/Mn) of 25 to 50,
    (c) that values of slope a and of intercept b obtained from a die swell (DS) and a shear rate ($\gamma$) measured in a region of shear rate ($\gamma$) (6.08 to 24.8 sec$^{-1}$) at 230 °C, in accordance with the equation (1) below

$$DS = a \times Ln(\gamma) + b \tag{1}$$

    are such that a$\leqq$0.05 and b$\leqq$1.45,
    (d) that the stress ratio of a stress ($\sigma$) at a strain of 1.0 to a maximum stress ($\sigma$max) in a stress-strain curve in uniaxial stretching at 0.1 sec$^{-1}$ measured at 170 °C is such that $\sigma$max/$\sigma \geqq 2.1$;

    and preferably the ethylene (co)polymer has a C$_{3\text{-}20}$ $\alpha$-olefin content of 10 mol% or less.

2.  The ethylene (co)polymer as claimed in claim 1, wherein the ethylene (co)polymer further satisfies the requirement

    (e) that a value of (a) as defined by the equation (2) below

$$\alpha = \varepsilon/t \tag{2}$$

    (wherein $\alpha$ is $\varepsilon/t$ when $\varepsilon$ defined by $\varepsilon$ = -Ln(sample diameter after t seconds I$_t$ /initial sample diameter I$_0$) is 0.6) when uniaxially stretched under a constant tension such that initial stress (= tension/initial cross section of sample) measured at 170 °C is 3.0x10$^4$ Pa is not greater than 0.03 and time for sample breakage is not shorter than 25 seconds.

3.  The ethylene (co)polymer as claimed in claim 1 or 2, wherein the ethylene (co)polymer further satisfies the requirement (f) HLMFR $\leqq$ 10 g/10 min.

4.  A hollow molded product comprising the ethylene (co)polymer as claimed in any one of claims 1 to 3, or composition thereof.

5.  A laminate comprising a layer comprising at least the ethylene (co)polymer as claimed in any one of claims 1 to 3 or compositions thereof and a barrier layer, and optionally also an adhesive layer.

6.  The laminate as claimed in claim 5, wherein the barrier layer comprises at least one member selected from polyamide resins, ethylene/vinyl acetate copolymer saponification products, poly(meth)acrylonitrile resins, polyacetal resins, polyester resins, polyvinylidene chloride resins or compositions thereof.

7.  The laminate as claimed in claim 5 or 6, wherein the adhesive layer comprises at least one adhesive resin selected from the group consisting of copolymers of unsaturated carboxylic acids or derivatives thereof with olefins and modified polyolefin resins grafted with unsaturated carboxylic acids or derivatives and mixtures of the adhesive resin with unmodified polyolefin.

8.  A blow molded multilayer product comprising a laminate which comprises a layer comprising the ethylene (co)polymer as claimed in any one of claims 5 to 7 or compositions thereof, a barrier layer, and optionally an adhesive layer.

9. A blow molded multilayer product comprising a laminate which comprises a layer of at least one resin selected from recycled resins composed of the laminate as claimed in any one of claims 5 to 7, compositions of the recycled resins and the ethylene (co)polymer as claimed in any one of claims 1 to 3, or compositions of them with polyolefin resins, a barrier layer, and optionally an adhesive layer.

10. The product as claimed in any of claims 4, 8 or 9, wherein the product is a fuel tank.

**Patentansprüche**

1. Ethylen-(Co)polymer, das die folgenden Erfordernisse

(a) bis (d) erfüllt:

(a) eine Dichte von 0,93 bis 0,98 g/cm$^3$,
(b) eine Molekulargewichtsverteilung (Mw/Mn) von 25 bis 50,
(c) dass die Werte der Steigung a und des Achsenabschnitts b, erhalten aus der Düsenquellung (DS) und der Scherungsrate ($\gamma$), die im Bereich einer Scherungsrate ($\gamma$)(6,08 bis 24,8 sec$^{-1}$) bei 230°C, gemessen wurde, entsprechend der nachstehenden Gleichung (1)

$$DS = a \times Ln(\gamma) + b \tag{1}$$

derart sind, dass a $\leq$ 0,05 und b $\leq$ 1,45,
(d) dass das Spannungsverhältnis einer Spannung ($\sigma$) bei einer Dehnung von 1,0 zu der maximalen Spannung ($\sigma$max) in der Spannungs-Dehnungskurve beim monoaxialen Verstrecken bei 0,1 sec$^{-1}$, gemessen bei 170°C, derart ist, dass $\sigma$max/($\sigma \geq$2,1 ist,

und wobei das Ethylen-(Co)polymer vorzugsweise einen Gehalt an C$_{3-20}$-$\alpha$-olefin von 10 Mol% oder weniger hat.

2. Ethylen-(Co)polymer nach Anspruch 1, wobei das Ethylen-(Co)polymer außerdem das Erfordernis (e) erfüllt, dass der durch die nachstehende Gleichung (2) definierte Wert von ($\alpha$)

$$\alpha = \varepsilon/t \tag{2}$$

(worin $\alpha$ $\varepsilon$/t ist, wenn $\varepsilon$ durch $\varepsilon$ = -Ln(Probendurchmesser nach t Sekunden I$_t$/ursprünglicher Probendurchmesser I$_0$) definiert ist, 0,6 ist) wenn monoaxial bei einer konstanten Zugspannung verstreckt wird, derart ist, dass die anfängliche Spannung (= Zugspannung/anfänglicher Querschnitt der Probe), gemessen bei 170°C, 3,0x10$^4$Pa ist, nicht größer als 0,03 ist und die Zeit bis zum Reißen der Probe nicht kürzer als 25 Sekunden ist.

3. Ethylen-(Co)polymer nach Anspruch 1 oder 2, wobei das Ethylen-(Co)polymer weiterhin das Erfordernis (f) HLMFR $\leq$ 10 g/10 min. erfüllt.

4. Hohler Formkörper, der das Ethylen-(Co)polymer nach einem der Ansprüche 1 bis 3 oder eine Zusammensetzung daraus enthält.

5. Laminat, welches eine Schicht, die mindestens das Ethylen-(Co)-polymer nach einem der Ansprüche 1 bis 3 oder eine Zusammensetzung daraus enthält und eine Sperrschicht und gegebenenfalls auch eine Haftschicht enthält.

6. Laminat nach Anspruch 5, wobei die Sperrschicht mindestens ein Mitglied enthält, das unter Polyamidharzen, Ethylen/Vinylacetat-Copolymer-Verseifungsprodukten, Poly(meth)acrylnitrilharzen, Polyacetalharzen, Polyesterharzen, Polyvinylidenchloridharzen oder Zusammensetzungen dieser ausgewählt ist.

7. Laminat nach Anspruch 5 oder 6, wobei die Haftschicht mindestens ein Kleberharz enthält, das aus der aus Copolymeren von ungesättigten Carbonsäuren oder Derivaten davon mit Olefinen und modifizierten Polyolefinharzen, die mit ungesättigten Carbonsäuren oder Derivaten davon gepfropft sind und Gemischen des Klebmittelharzes mit unmodifiziertem Polyolefin bestehenden Gruppe ausgewählt ist.

**8.** Blasgeformtes Mehrschichtprodukt, welches ein Laminat, das eine Schicht, die Ethylen-(Co)polymer nach einem der Ansprüche 5 bis 7 oder Zusammensetzungen daraus enthält, eine Sperrschicht und gegebenenfalls eine Haftschicht umfasst.

**9.** Blasgeformtes Mehrschichtprodukt, welches ein Laminat, das eine Schicht aus mindestens einem Harz, das ausgewählt ist unter wiederverwerteten Harzen, die aus dem Laminat nach einem der Ansprüche 5 bis 7 gebildet sind, Zusammensetzungen aus den wiederverwerteten Harzen und dem Ethylen-(Co)polymer nach einem der Ansprüche 1 bis 3 oder Zusammensetzungen dieser mit Polyolefinharzen, eine Sperrschicht und gegebenenfalls eine Haftschicht umfasst.

**10.** Produkt nach einem der Ansprüche 4, 8 oder 9, wobei das Produkt ein Treibstofftank ist.

**Revendications**

**1.** (Co)polymère d'éthylène qui satisfait les spécifications (a) à (d) suivantes :

(a) une masse volumique de 0,93 à 0,98 g/cm$^3$,
(b) une distribution de masse moléculaire (Mw/Mn) de 25 à 50,
(c) que les valeurs de la pente a et de la coordonnée à l'origine b obtenues à partir d'un gonflement à la filière (DS) et d'un gradient de cisaillement ($\gamma$) mesuré dans une région de gradient de cisaillement ($\gamma$) (6,08 à 24,8 s$^{-1}$) à 230°C, selon l'équation (1) ci-dessous

$$DS = a \times Ln\,(\gamma) + b \qquad (1)$$

soient telles que a $\leq$ 0,05 et b $\leq$ 1,45,
(d) que le rapport de contrainte d'une contrainte ($\sigma$) à une déformation de 1,0 sur une contrainte maximale ($\sigma$max) dans une courbe contrainte-déformation à un étirage uniaxial à 0,1 s$^{-1}$ mesuré à 170°C soit tel que $\sigma$max/$\sigma$ $\geq$ 2,1 ;

et de préférence le (co)polymère d'éthylène a une teneur en $\alpha$-oléfine en C$_{3\ \text{à}\ 20}$ de 10 % en mole ou moins.

**2.** (Co)polymère d'éthylène selon la revendication 1, dans lequel le (co)polymère d'éthylène satisfait en outre la spécification (e) qu'une valeur de ($\alpha$) telle que définie par l'équation (2) ci-dessous

$$\alpha = \varepsilon/t \qquad (2)$$

(dans laquelle $\alpha$ est $\varepsilon$/t lorsque $\varepsilon$ défini par $\varepsilon$ = -Ln (diamètre de l'échantillon après t secondes I$_t$/diamètre de l'échantillon initial I$_0$) vaut 0,6) lorsqu'il est étiré uniaxialement sous une tension constante telle que la contrainte initiale (= tension/section transversale initiale de l'échantillon) mesurée à 170°C vaut 3,0 x 10$^4$ Pa ne soit pas supérieur à 0,03 et que le temps pour la rupture de l'échantillon ne soit pas plus court que 25 secondes.

**3.** (Co)polymère d'éthylène selon la revendication 1 ou 2, dans lequel le (co)polymère d'éthylène satisfait en outre la spécification (f) HLMRF $\leq$ 10 g/10 min.

**4.** Produit moulé creux comprenant le (co)polymère d'éthylène selon quelconque des revendications 1 à 3, ou une composition de celui-ci.

**5.** Stratifié comprenant une couche comprenant au moins le (co)polymère d'éthylène selon l'une quelconque des revendications 1 à 3 ou des compositions de celui-ci et une couche barrière, et facultativement également une couche adhésive.

**6.** Stratifié selon la revendication 5, dans lequel la couche barrière comprend au moins un élément choisi parmi les résines de polyamide, les produits de saponification de copolymère d'éthylène/acétate de vinyle, les résines de poly(méth)acrylonitrile, les résines de polyacétal, les résines de polyester, les résines de polychlorure de vinylidène ou les compositions de ceux-ci.

**7.** Stratifié selon la revendication 5 ou 6, dans lequel la couche adhésive comprend au moins une résine adhésive choisie dans le groupe constitué par les copolymères d'acides carboxyliques insaturés ou de dérivés de ceux-ci avec des oléfines et les résines de polyoléfines modifiées greffées avec des acides carboxyliques insaturés ou des dérivés ou des mélanges de la résine adhésive avec une polyoléfine non modifiée.

**8.** Produit multicouche moulé-soufflé comprenant un stratifié qui comprend une couche comprenant le (co)polymère d'éthylène selon l'une quelconque des revendications 5 à 7 ou des compositions de celui-ci, une couche barrière, et facultativement une couche adhésive.

**9.** Produit multicouche moulé-soufflé comprenant un stratifié qui comprend une couche d'au moins une résine choisie parmi les résines recyclées composées du stratifié selon l'une quelconque des revendications 5 à 7, les compositions des résines recyclées et du (co)polymère d'éthylène selon l'une quelconque des revendications 1 à 3 ou les compositions de ceux-ci avec des résines de polyoléfine, une couche barrière, et facultativement une couche adhésive.

**10.** Produit selon l'une quelconque des revendications 4, 8 ou 9, dans lequel le produit est un réservoir à carburant.

Fig. 1

( a )

( b )                    ( c )